# FASCICULE DE BREVET EUROPEEN

(11) **EP 3 010 967 B1**
(45) Date de publication et mention de la délivrance du brevet: **17.05.2017**
(21) Numéro de dépôt: 14731633.5
(22) Date de dépôt: 19.06.2014
(51) Int. Cl.: C08J 11/14, B29B 17/02, C08J 11/24

(54) **PROCÉDÉ DE RÉCUPÉRATION DE FIBRES ORGANIQUES À PARTIR D'UN MATÉRIAU COMPOSITE**
VERFAHREN ZUR RÜCKGEWINNUNG ORGANISCHER FASERN AUS EINEM VERBUNDMATERIAL
METHOD FOR RECOVERING ORGANIC FIBERS FROM A COMPOSITE MATERIAL

(30) Priorité: 20.06.2013 FR 1355869
(43) Date de publication de la demande: 27.04.2016
(73) Titulaire: CNRS Centre National de la Recherche Scientifique, 75794 Paris Cedex 16 (FR); Université de Bordeaux, 33000 Bordeaux (FR); Airbus Operations (S.A.S.), 31060 Toulouse (FR)
(72) Inventeur: AYMONIER, Cyril, F-33130 Begles (FR); DEBEAUVAIS, Antoine, F-80260 Talmas (FR); LOPPINET SERANI, Anne, . (FR)
(74) Mandataire: Regimbeau
(86) Numéro de dépôt international: PCT/EP2014/062958
(87) Numéro de publication internationale: WO 2014/202730

(56) Documents cités:
- EP-A2- 1 419 830
- DE-A1-102011 081 575
- R MORALES IBARRA ET AL: "Water and Benzyl Alcohol in Subcritical and Supercritical Conditions as means for Carbon Fiber Recovery from Thermoset Composite Materials", JOURNAL OF ADVANCED RESEARCH IN PHYSICS, 16 mai 2012 (2012-05-16), XP055106125,
- I Okajima ET AL: "Chemical Recycling of Carbon Fiber Reinforced Plastic with Supercritical Alcohol", Journal of Advanced Research in Physics, 31 décembre 2012 (2012-12-31), pages 21211-1, XP055106996, Extrait de l'Internet: URL:http://dossier-services.internal.epo.o rg/application/EPO-internal/EP/11002460/?s erveAsMime=application/pdf;overlay=true&in line=true&booklet=false&language=en&client _id=diplus#view=FitH&toolbar=0&navpanes=0 [extrait le 2014-03-11]
- PINERO-HERNANZ ET AL: "Chemical recycling of carbon fibre reinforced composites in nearcritical and supercritical water", COMPOSITES PART A: APPLIED SCIENCE AND MANUFACTURING, ELSEVIER SCIENCE PUBLISHERS B.V., AMSTERDAM, NL, vol. 39, no. 3, 11 janvier 2008 (2008-01-11), pages 454-461, XP022518949, ISSN: 1359-835X, DOI: 10.1016/J.COMPOSITESA.2008.01.001

## Description

### Domaine technique

Il est question dans la présente du domaine du recyclage et de la valorisation des déchets et/ou de la fin de vie de matériaux composites, et notamment de la récupération de fibres organiques à partir de matériaux composites fibre(s) organique(s)-matrice(s) polymère(s). En particulier, il est question du domaine des procédés de récupération de fibres organiques à partir de matériaux composites fibre(s) organique(s)-matrice(s) polymère(s).

### État de la technique

Un matériau composite est un assemblage d'au moins deux matériaux non miscibles (mais ayant une forte capacité d'adhésion). Ainsi, le matériau composite possède des propriétés que chacun des deux matériaux ne possède pas.

Un matériau composite comprend typiquement une ossature, appelée aussi renfort, et une matrice.

Le renfort assure généralement la tenue mécanique du matériau. Le renfort peut être en métal, en verre, en carbone, en céramique, en minéral (tel qu'argile, talc) ou en un matériau polymère ou organique et présenter plusieurs formes, telles que fibres (courtes de 0,1 à 1 mm, semi-longues de un à 100 mm ou continues supérieures à 100 mm) ou charges de formes diverses (trichites, billes, plaquettes, etc.). Les fibres continues peuvent être disposées, en une ou plusieurs couches, parallèlement les unes par rapport aux autres (renforcement unidirectionnel), selon un angle prédéfini, par exemple à 45° les unes par rapport aux autres (renforcement multidirectionnel) ou de façon aléatoire. Dans le cas d'une pluralité de couches, deux couches peuvent présenter des orientations différentes parmi celles présentées ci-dessus. Le renfort peut-être seul au sein de la matrice ou associé à un autre renfort de nature différente.

La matrice assure la cohésion de la structure et le transfert des efforts vers le renfort. Il existe des matériaux composites à matrice métallique, céramique ou polymère. Parmi ces dernières, on distingue les matrices thermodurcissables et les matrices thermoplastiques. Dans la suite, il sera question de ces matériaux composites avec une matrice polymère aussi appelé composites à matrice organique.

Ces matériaux composites sont utilisés dans diverses applications. Cependant, les déchets issus de ces matériaux composites sont difficilement valorisables. En effet, de par la forte capacité d'adhésion du renfort et de la matrice, ces matériaux composites sont difficilement séparables sans destruction de l'une et/ou de l'autre.

En fin de vie, ces matériaux composites sont généralement stockés en décharge dans des centres d'enfouissement technique. Ce stockage a un coût élevé et en constante augmentation. Par ailleurs, le stockage ne permet aucune valorisation particulière de ces matériaux et sa pérennité n'est pas assurée.

Une autre solution existe pour ces matériaux composites : l'incinération. En effet, les matériaux composites à matrice polymère possèdent un pouvoir calorifique qui dépend de la nature de la matrice polymère et du taux de fibres dans le matériau composite. L'incinération de ceux-ci permet de les valoriser en énergie sans opportunité de valorisation matière alors que la partie fibres est à haute valeur ajoutée. Dans le cas d'un matériau composite à matrice polymère avec un renfort organique, la totalité du matériau composite peut être transformée en énergie par incinération. Cependant, ces dernières années, l'accent est mis sur les considérations environnementales. Par exemple la directive 2000/53/CE relative aux véhicules hors d'usage prescrit qu'à partir du 1er janvier 2006 et jusqu'au 1er janvier 2015, le taux de valorisation des matériaux composants ceux-ci devra passer de 85 à 95 % avec un taux de recyclage et de réutilisation passant de 80 à 85 %. Autre exemple, la directive 2004/01/CE prescrit de prendre en compte les aspects environnementaux dans les comptes individuels et consolidés des entreprises.

Ni le stockage dans des centres d'enfouissement technique, ni l'incinération ne peuvent être des solutions satisfaisantes.

C'est pourquoi, d'autres solutions ont été mises au point afin de permettre la valorisation de ces matériaux composites. Par exemple, la pyrolyse en bain de sel fondu constitue une solution intermédiaire entre la valorisation énergétique et la valorisation de la matière. Ce procédé consiste à dépolymériser les parties polymères du matériau composite à une température de 500 °C pour obtenir des produits pétrochimiques. Cependant, pour les matériaux composites à matrice polymère avec un renfort organique, le coût de ce procédé se révèle très élevé (10 fois plus onéreux que l'incinération). Par conséquent, ce procédé est moins intéressant que l'incinération.

Une autre solution est la thermolyse, plus particulièrement la pyrolyse. Ce procédé consiste en une dégradation thermique (à une température comprise entre environ 450°C et environ 700°C) de la partie organique d'un matériau composite comprenant des fibres de carbone ou des fibres de verre et à matrice polymère en quasi-absence d'oxygène. La thermolyse permet à la fois de valoriser la matrice polymère et les fibres non-organiques des matériaux composites. Cependant pendant la thermolyse, les matériaux composites sont soumis à une trop forte température ce qui ne permet pas de valoriser les fibres organiques lorsqu'elles sont utilisées en tant que renfort. Par ailleurs, ce procédé conduit à la formation de résidus secondaires tels que particules solides et gaz qui sont formés au cours du traitement et qu'il faut alors traiter.

De nombreuses recherches s'orientent vers la solvolyse des matériaux composites, en particulier des matériaux composites comprenant une matrice polymère et un renfort constitué de fibres de carbone ou de fibres de verre. En effet, la température maximale acceptable par ces fibres autorise l'utilisation de températures relativement élevées pour la décomposition de la matrice (jusqu'à 500°C). Le solvant utilisé est généralement pur et peut être de l'eau, des solvants organiques tels que les alcools (par exemple l'éthanol et le méthanol), ou l'acétone, en présence ou non d'un catalyseur.

Liu Yuyan et al. (« La recherche expérimentale sur le recyclage de fibres d'aramides par une méthode faisant intervenir un solvant », ou « The Experimental Research on Recycling of Aramid Fibres by Solvent Method » en anglais, in J. Reinforced Plastics and Composites, vol. 28, No. 18/2009) propose un procédé de recyclage de matériaux composites comprenant une matrice en époxy et des fibres d'aramide en tant que renfort par dissolution de la matrice dans un solvant. Dans ce procédé, un matériau composite est découpé en morceaux puis plongé dans un bain de 1,2,3,4-tétrahydronaphtalène, et chauffé à différentes températures pendant différentes durées. Les auteurs ont essayé des températures de 280, 290, 300, 310 et 320°C avec un ratio matrice polymère/solvant de 1 g/10 mL pendant 1 h. cette étude a conclu à la faisabilité du recyclage des fibres d'aramide contenues dans les matériaux composites dont la matrice organique est une résine époxy.

Cependant, ce procédé utilise comme solvant le 1,2,3,4-tétrahydronaphthalène, solvant ayant un impact très négatif sur l'environnement et implique de découper le composite en petits morceaux afin que le solvant puisse accéder à l'ensemble de la surface de la résine, ce qui empêche de récupérer la fibre pour un réemploi ultérieur.

### Présentation

Un objectif est donc de pallier au moins un inconvénient de la technique antérieure présentée ci-dessus.

Pour cela un procédé de récupération de fibres organiques à partir d'un matériau composite comportant une matrice polymère et des fibres organiques est proposé. Ce procédé comprend les étapes suivantes :
- fournir une solution comprenant un mélange d'eau et d'alcool ;
- disposer le matériau composite à l'intérieur d'un réacteur ;
- mettre en contact le mélange et le matériau composite pour réaliser une réaction de solvolyse de la matrice polymère du matériau composite ;
- récupérer les fibres organiques ;
dans lequel la pression et la température dans le réacteur sont réglées de manière à se positionner dans le domaine sous-critique homogène du diagramme de phases, dans le domaine supercritique, ou au voisinage du point critique ; et
dans lequel la température est inférieure à la température de dégradation des fibres organiques.

Grâce à ce procédé, la revalorisation des fibres organiques des matériaux composites comprenant une matrice polymère et un renfort en fibres organiques est possible sans l'usage de solvant ayant un impact très négatif sur l'environnement.

Les autres caractéristiques non optionnelles sont :
- la température et/ou la pression sont supercritiques ;
- les fibres organiques sont des fibres d'aramides et la température est réglée à au plus 300°C ;
- les fibres d'aramides sont choisies parmi : les fibres de méta-aramides, les fibres de para-aramides, les fibres en copolymère de méta-aramides et de para-aramides, ou un mélange de ceux-ci ;
- les fibres organiques sont des fibres végétales ;
- les fibres végétales sont choisies parmi le groupe constitué de : fibres de lin, fibres de bananier, fibres de chanvre, fibres d'ortie, fibres de noix de coco, fibres de coton, fibres d'henequen, fibres de sisal, fibres de jute, fibres de ramie, fibres issues de la paille de blé ou tout autre céréale, fibres de bois, ou un mélange de celles-ci ;
- la matrice polymère est un polymère thermodurcissable ou un polymère thermoplastique ;
- le mélange d'eau et d'alcool présente un ratio volumique eau/alcool compris entre 30/70 et 70/30 ;
- la mise en contact du mélange avec le matériau composite dure entre 15 min et 105 min ;
- la mise en contact du mélange avec le matériau composite est réalisée par circulation d'un flux de mélange à travers le réacteur dans laquelle est disposé le matériau composite ;
- le procédé comprend en outre l'étape consistant à réduire le matériau composite en granules avant de le mettre en contact avec le mélange ;
- le procédé comprend en outre la récupération d'un effluent issu de la solvolyse et évacué hors du réacteur ; et
éventuellement la combustion de l'effluent pour la chauffe du réacteur.

### Dessins

D'autres objectifs, caractéristiques et avantages apparaîtront à la lecture de la description qui suit en référence aux dessins donnés à titre illustratif et non limitatif.
La figure 1 est un schéma représentant les différentes étapes du procédé de récupération de fibres organiques.
La figure 2 est une photographie en noir et blanc montrant un échantillon de matériau composite composé d'une matrice polymère en PLA et de fibres de lin tissées avant traitement selon le procédé ici décrit.
La figure 3 est une photographie en noir et blanc montrant un échantillon correspondant à l'échantillon de la figure 2 mais ayant subi le traitement selon le procédé ici décrit.

### Description

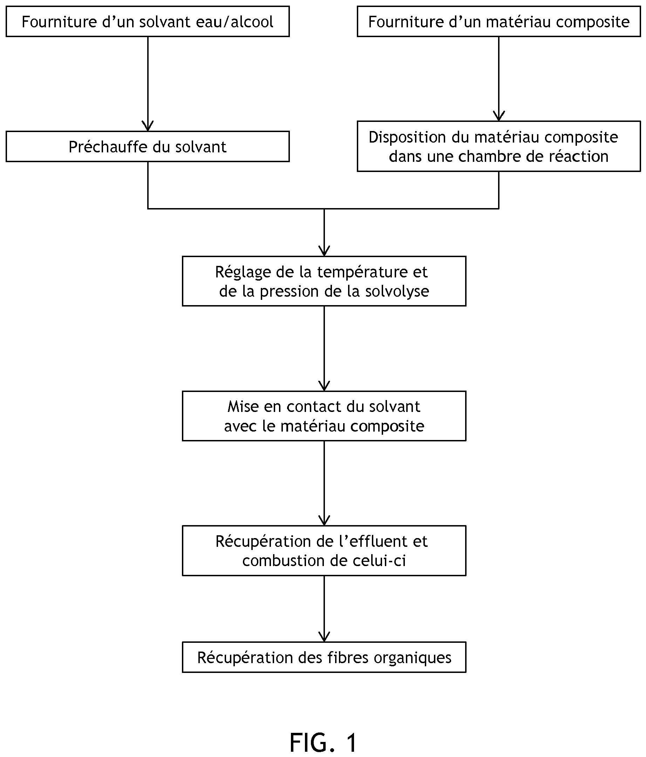

Un procédé de récupération de fibres organiques à partir d'un matériau composite comportant une matrice polymère et des fibres organiques est décrit ci-après en référence à la figure 1.

Le terme « matériau composite » est compris ici comme un assemblage d'au moins deux matériaux non miscibles (mais ayant une forte capacité d'adhésion). Le nouveau matériau ainsi constitué possède des propriétés que les éléments seuls ne possèdent pas. Un matériau composite comprend une matrice et un renfort.

Le terme « fibre » signifie ici une formation élémentaire végétale, animale, ou artificielle, présentant un diamètre pouvant être jusqu'à plusieurs centaines de fois plus petit que sa longueur, et se présentant généralement sous forme de faisceaux. La fibre organique peut être présente au sein du matériau composite sous la forme de fibres simples ou d'un tissu de fibres tissées entre elles.
Lorsqu'il s'agit d'une formation élémentaire végétale, cet élément désigne un filament souple, dite fibre végétale, composant le tissu végétal, en particulier le bois, la tige ou les racines de certaines plantes. Les exemples de fibres végétales sont : la fibre de bananiers (genre *Musa*), et en particulier la fibre d'abaca (*Musa textiles*, aussi appelée chanvre de Manille), la fibre de chanvre (*Cannabis sativa*, par exemple sous forme de chènevottes), la fibre d'ortie (genre *Urtica*), la fibre de noix de coco (*Cocos nucifera*), la fibre de coton (genre *Gossypium*), la fibre d'henequen (*Agave fourcroydes*)*,* la fibre de sisal (*Agave sisalana*), la fibre de jute (genre *Corchorus*), la fibre de lin (*Linum usitatissimum,* par exemple sous la forme d'anas), la fibre de ramie (*Bohemeria nivea*), les fibres issues de la paille de blé ou tout autre céréale, les fibres de bois, ou un mélange de celles-ci.

Lorsqu'il s'agit d'une formation élémentaire artificielle, il est principalement question ici de fibres d'aramide. L'aramide (mot-valise issu de l'anglais « *aromatic polyamide* », ou « polyamide aromatique » en français) est un polymère constitué d'une longue chaîne dans laquelle au moins 85 % des groupements aramides (-NH-CO-) sont directement liés à deux noyaux benzéniques.

De manière générale, l'aramide est obtenu par polycondensation d'une diamine aromatique (NH₂-Ar¹-NH₂) et d'un dichlorure d'acide aromatique (ClCO-Ar²-COCl) dans un solvant organique :

n NH₂-Ar¹-NH₂ + n ClCO-AR²-COCl → -(NH-Ar¹-NH-CO-Ar²-CO)ₙ- + 2n HCl,

Ar¹ et Ar² représentant chacun un noyau aromatique et -(NH-Ar¹-NH-CO-Ar²-CO)ₙ- est l'aramide résultant de la polycondensation.

Il existe plusieurs types commerciaux de fibres d'aramide qui se différencient par la position des groupements fonctionnels sur les noyaux aromatiques :
- les para-aramides, par exemple le poly(p-phénylènetéréphtalamide) ;
- les méta-aramides, par exemple le poly(m-phénylèneisophtalamide) ; et
- les copolymères de para-aramides.

Les fibres de para-aramides présentent un degré d'orientation très élevé lors du procédé de filage. Par conséquent, elles se caractérisent par une résistance en traction élevée (de l'ordre de 3 GPa) et une faible masse volumique (de l'ordre de 1,45 g.cm⁻³). Elles sont utilisées par exemple pour fabriquer des protections balistiques, des renforts dans les élastomères (pneumatiques, tuyaux), de cordages et de câbles, de renforts de faisceaux de fibres optiques, ou renfort pour matériaux composites. Plus particulièrement, sous leur forme courte, les fibres de para-aramides sont utilisées pour la fabrication de gants, de vêtements de protection et plus récemment sont utilisées en tant que renfort dans les matrices thermoplastiques injectables pour leur conférer une meilleure résistance à l'abrasion. Sous forme de pulpe, ces fibres ont remplacé la fibre d'amiante dans les applications où de bonnes résistances à la chaleur et à l'abrasion sont requises, par exemple, dans les disques d'embrayage, les plaquettes de freins et joints.

En 1998, la consommation européenne de fibres de para-aramides était d'environ 9000 t.

Les para-aramides sont principalement commercialisées sous les noms de kevlar™ par Dupont de Nemours, twaron™ par Akzo et technora™ par Teijin.

Les fibres de méta-aramides présentent une résistance à la traction plus faible que les fibres de para-aramides. En revanche, elles sont thermiquement et chimiquement plus stables et sont très prisées dans les applications concernant la protection, par exemple la fabrication de vêtements, les fibres industrielles, pour la résistance au feu et aux agents chimiques. Sous forme de papier, elles sont très utilisées pour l'isolation électrique et la fabrication de nids d'abeilles pour composites « sandwich ».

Les méta-aramides sont principalement commercialisées sous les noms de nomex™ par Dupont de Nemours et conex™ par Teijin.

Le polymère constituant la matrice polymère est un polymère thermodurcissable ou un polymère thermoplastique. De préférence, le polymère thermodurcissable est choisi parmi le groupe constitué des résines époxydes ou phénoliques.

Le procédé utilise comme solvant une solution comprenant un mélange d'eau et d'alcool. Le ratio volumique eau/alcool du mélange est de préférence 50/50. De préférence, l'alcool est choisi parmi le groupe constitué du méthanol, de l'éthanol, du n-propanol, de l'isopropanol, du glycérol ou un mélange de ceux-ci.

Le mélange d'eau et d'alcool présente un ratio volumique eau/alcool compris avantageusement entre 30/70 et 70/30, de préférence entre 40/60 et 60/40, encore de préférence entre 45/55 et 55/45, toujours de préférence environ 50/50.

Le procédé comprend également la disposition du matériau composite à l'intérieur d'un réacteur. Avant de disposer le matériau composite à l'intérieur du réacteur, celui-ci peut être découpé en section de plus ou moins grand volume, ou réduit par granulation en fonction de la taille de ce réacteur.

Le procédé comprend encore la mise en contact du solvant avec le matériau composite pour réaliser une réaction de solvolyse de la matrice polymère du matériau composite.

Les conditions en pression et température sont réglées de manière à se positionner dans le domaine sous-critique homogène du diagramme de phases, c'est-à-dire au-dessus de la courbe de transition liquide-vapeur, ou dans le domaine supercritique, c'est-à-dire au-dessus de la température critique et de la pression critique, ou de préférence au voisinage du point critique, c'est-à-dire à plus ou moins 50°C de la température critique et à plus ou moins 50 bar de la pression critique, encore de préférence à plus ou moins 25°C de la température critique et à plus ou moins 25 bar de la pression critique.

Le réacteur peut être chauffé grâce à un four dans lequel il est disposé. En variante ou en complément, le réacteur peut également être chauffé par la combustion des effluents produits lors de la solvolyse de la matrice, c'est-à-dire que ces effluents sont récupérés pour être brûlés.

La réaction de solvolyse est de préférence réalisée dans des conditions de température et de pression supercritiques, c'est-à-dire supérieures à Tc et Pc du solvant.

La température doit être inférieure à la température de dégradation des propriétés des fibres organiques pour ne pas les détériorer, par exemple le module de Young, la limite d'élasticité, l'aspect de la surface des fibres organiques, etc. Par exemple, la température est préférentiellement réglée au plus à 300°C dans le cas des fibres d'aramide, et au plus à 175°C pour les fibres de lin.

La mise en contact dure entre environ 15 min et environ 105 min, de préférence entre environ 30 min et environ 90 min, encore de préférence entre environ 45 min et environ 75 min, toujours de préférence environ 60 min.

La mise en contact du solvant avec le matériau composite est avantageusement réalisée par circulation d'un flux de solvant à travers le réacteur dans lequel est disposé le matériau composite.

Par exemple, en amont du réacteur est prévue une arrivée de solvant. L'arrivée de solvant peut être couplée à une pompe afin d'amener le solvant à l'intérieur du réacteur à la pression choisie. La pompe est donc capable de générer des pressions allant jusqu'à 30 MPa.

Le procédé peut également comprendre avant la mise en contact du mélange une étape de préchauffe du solvant. Pour cela, l'arrivée de solvant peut également être couplée à un préchauffage afin de préchauffer le solvant à la température souhaitée en entrée du réacteur, de préférence le solvant est préchauffé de manière à ce qu'en entrée du réacteur celle-ci est égale à la température de la solvolyse.

En aval du réacteur est prévue une évacuation permettant au solvant dans lequel ont été extraites les molécules issues de la décomposition de la matrice polymère (appelé effluent) par solvolyse d'être prélevé. Lorsque la décomposition de la matrice polymère est totale, ce sont des monomères qui sont récupérés dans le mélange et qui peuvent être réintroduits dans la chaine de production de nouveaux polymères.

À la fin de la solvolyse, les fibres organiques sont récupérées. Ces fibres organiques présentent un état de surface non détérioré par rapport à des fibres organiques neuves.

Ce procédé trouve des applications dans le recyclage de matériaux composites comprenant une matrice polymère et un renfort en fibres organiques. Par exemple ce procédé sera avantageusement utilisé pour le recyclage de pneumatiques, de bandes transporteuses, de tuyaux haute pression, de courroies de transmission, de matériaux de construction pour les avions, les bateaux, les blindages, les câbles tels que cordages, câbles de télécommunications, les vêtements de protection tels qu'uniformes de pompiers, casques militaires et casques de sécurité, gilets pare-balles, des vêtements anti-coupure ainsi que des plaquettes pour freins.

### Exemples 1 (E1)

Plusieurs mélanges eau/éthanol ont été préparés et utilisés en tant que solvant. Les pourcentages en poids de résine constituant la matrice polymère extraite sont résumés dans le tableau 1 ci-dessous.

**Tableau1**

| | **E1-1** | **E1-2** | **E1-3** | **E1-4** | **E1-5** |
|---|---|---|---|---|---|
| **% eau (volume)** | 90 | 75 | 50 | 25 | 10 |
| **% résine extraite (poids)** | 93 | 98,8 | 99,1 | 81,6 | 73,2 |
| **Tc (°C)** | 368 | 325 | 315 | 277 | 257 |

Un matériau composite constitué d'environ 30% en poids d'une matrice polymère (résine époxy) et de fibres d'aramide est découpé en morceaux de poids compris entre 1 g et 10 g.

Les morceaux de matériau composite sont ensuite disposés à l'intérieur d'un réacteur cylindrique de 110 mL.

Le solvant est ensuite mis en contact avec le matériau composite pendant 60 minutes grâce à une arrivée de solvant disposée en amont du réacteur et couplée à une pompe haute pression. Par ailleurs, l'arrivée de solvant est couplée à un préchauffage pour élever sa température à la température de la solvolyse (300°C). Le réacteur est également chauffé à la température de solvolyse. La pression au sein du réacteur est de 250 bar.

L'analyse GC/MS de l'effluent liquide a permis d'identifier les produits issus de la décomposition de la matrice polymère. Les produits sont : le phénol, la benzénamine, la quinoline, le bisphénol, le 2-éthylhexan-1-ol, et le 1,1-diéthoxyéthane et leurs dérivés.

Ces produits correspondent à des monomères ou à des fragments de polymères présents initialement dans la matrice polymère, et/ou dans les durcisseurs, et/ou colles éventuellement présents dans le matériau composite de départ. La présence de ces produits confirme que la matrice polymère a été dépolymérisée. Par ailleurs aucune trace de molécules qui pourraient être issues de la décomposition des fibres d'aramides, n'a été détectée ; ce qui confirme le caractère sélectif des solvolyses utilisées.

Un solvant composé d'un mélange ayant un ratio volumique eau/éthanol de 50/50 constitue un compromis entre efficacité de la solvolyse et la qualité de la surface des fibres d'aramide.

### Exemple 2 : fibres de lin

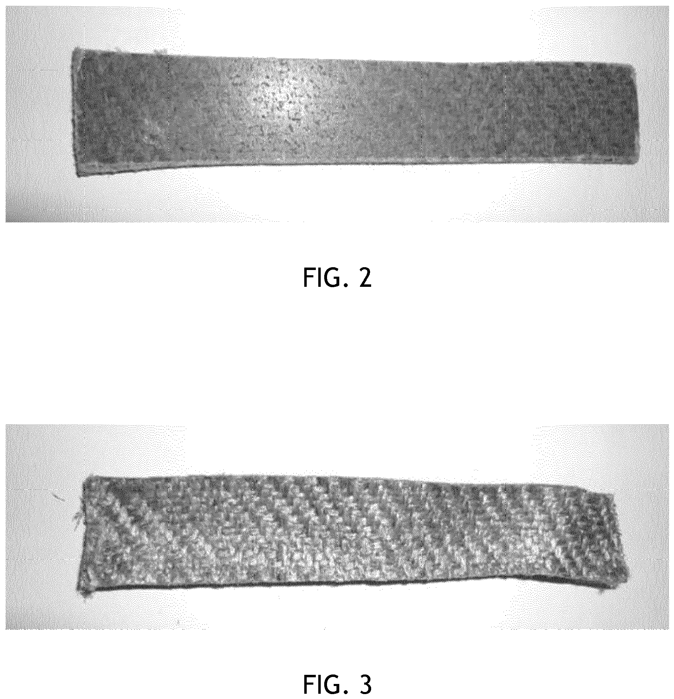

Un matériau composite constitué d'environ 40 % en volume de fibres de lin et de 60 % en volume d'une matrice polymère en acide polylactique a été découpé en échantillon de forme générale rectangulaire tel qu'illustré sur la figure 2. Sur cette figure 2, il est visible que les fibres de lin sont noyées dans la matrice polymère.

Ce matériau est ensuite placé dans un réacteur et mis en contact avec un solvant composé d'un mélange d'eau et d'éthanol à un ratio volumique de 50/50 et préchauffé à 175°C. La solvolyse est effectuée à 175°C et à 250 bars pendant 30 minutes. Ces conditions correspondent au domaine sous-critique homogène du solvant.

La figure 3 montre ce qui reste du matériau composite à la fin de la solvolyse. La matrice polymère a été totalement décomposée et les fibres de lin sont restées intactes.

### Exemples comparatifs 1 (EC1) : solvants purs

Des exemples comparatifs ont été effectués avec des solvants purs : l'eau, l'éthanol et l'isopropanol. Le procédé utilisé est le même que pour les exemples 1 ci-dessus. Le tableau 2 ci-dessous donne le pourcentage en masse de matrice polymère extraite en fonction du solvant utilisé et de la température de la solvolyse.

**Tableau 2**

| **Température de la solvolyse** | **eau** | **éthanol** | **isopropanol** |
|---|---|---|---|
| **150°C** | 2,4 % | 3,1 % | 0,3 % |
| **250°C** | 27,8 % | 7,9 % | 6,8 % |
| **300°C** | 97,9 % | 68,2 % | 36,8 % |
| **400°C** | 100 % | - | - |

Le tableau montre que la solvolyse est inefficace quel que soit le solvant pur utilisé à une température de 150°C. Il y a une amélioration quand la température est augmentée et le pourcentage de résine extraite atteint à 300°C 97,9% pour l'eau, mais seulement 68,2% pour l'éthanol et 36,8% pour l'isopropanol. Cependant, avec le solvant eau et une température de solvolyse à 300°C, les fibres sont altérées. Avec ce solvant à 400°C, la dégradation de la fibre organique est totale.

Le tableau ne présente pas de valeur pour une solvolyse à 400°C avec l'éthanol ou l'isopropanol car à cette température, les molécules d'éthanol et d'isopropanol risquent de subir une dégradation.

## Revendications

1. Procédé de récupération de fibres organiques à partir d'un matériau composite comportant une matrice polymère et des fibres organiques, le procédé comprenant les étapes suivantes :
- fournir une solution comprenant un mélange d'eau et d'alcool ;
- disposer le matériau composite à l'intérieur d'un réacteur ;
- mettre en contact le mélange et le matériau composite pour réaliser une réaction de solvolyse de la matrice polymère du matériau composite ;
- récupérer les fibres organiques ;
dans lequel la pression et la température dans le réacteur sont réglées de manière à se positionner dans le domaine sous-critique homogène du diagramme de phases, dans le domaine supercritique, ou au voisinage du point critique ; et
dans lequel la température est inférieure à la température de dégradation des fibres organiques.

2. Procédé selon la revendication 1, dans lequel, la température et/ou la pression sont supercritiques.

3. Procédé selon la revendication 1 ou la revendication 2, dans lequel les fibres organiques sont des fibres d'aramides et la température est réglée à au plus 300°C.

4. Procédé selon la revendication 3, dans lequel les fibres d'aramides sont choisies parmi : les fibres de méta-aramides, les fibres de para-aramides, les fibres en copolymère de méta-aramides et de para-aramides, ou un mélange de ceux-ci.

5. Procédé selon la revendication 1 ou la revendication 2, dans lequel les fibres organiques sont des fibres végétales.

6. Procédé selon la revendication 5, dans lequel les fibres végétales sont choisies parmi le groupe constitué de : fibres de lin, fibres de bananier, fibres de chanvre, fibres d'ortie, fibres de noix de coco, fibres de coton, fibres d'henequen, fibres de sisal, fibres de jute, fibres de ramie, fibres issues de la paille de blé ou tout autre céréale, fibres de bois, ou un mélange de celles-ci.

7. Procédé selon l'une des revendications 1 à 6, dans lequel la matrice polymère est un polymère thermodurcissable ou un polymère thermoplastique.

8. Procédé selon l'une des revendications 1 à 7, dans lequel le mélange d'eau et d'alcool présente un ratio volumique eau/alcool compris entre 30/70 et 70/30.

9. Procédé selon l'une des revendications 1 à 8, dans lequel la mise en contact du mélange avec le matériau composite dure entre 15 min et 105 min.

10. Procédé selon l'une des revendications 1 à 9, dans lequel la mise en contact du mélange avec le matériau composite est réalisée par circulation d'un flux de mélange à travers le réacteur dans lequel est disposé le matériau composite.

11. Procédé selon l'une des revendications 1 à 10, comprenant en outre l'étape consistant à réduire le matériau composite en granules avant de le mettre en contact avec le mélange.

12. Procédé selon l'une des revendications 1 à 11, comprenant en outre la récupération d'un effluent issu de la solvolyse et évacué hors du réacteur ; et éventuellement la combustion de l'effluent pour la chauffe du réacteur.

## Patentansprüche

1. Verfahren zur Rückgewinnung organischer Fasern aus einem Verbundmaterial, aufweisend eine Polymermatrix und organische Fasern, wobei das Verfahren die folgenden Schritte umfasst:
- Bereitstellen einer Lösung, die ein Gemisch aus Wasser und Alkohol umfasst;
- Anordnen des Verbundmaterials im Innern eines Reaktors;
- Inkontaktversetzen des Gemischs und des Verbundmaterials, um eine Solvolysereaktion der Polymermatrix des Verbundmaterials durchzuführen;
- Rückgewinnen der organischen Fasern;
wobei der Druck und die Temperatur in dem Reaktor derart geregelt sind, dass sie sich im homogenen unterkritischen Bereich des Phasendiagramms positionieren, im superkritischen Bereich, oder in der Nähe des kritischen Punkts; und
wobei die Temperatur unter der Zersetzungstemperatur der organischen Fasern liegt.

2. Verfahren nach Anspruch 1, wobei die Temperatur und/oder der Druck superkritisch sind.

3. Verfahren nach Anspruch 1 oder Anspruch 2, wobei die organischen Fasern Aramidfasern sind und die Temperatur auf höchstens 300 °C eingestellt ist.

4. Verfahren nach Anspruch 3, wobei die Aramidfasern aus den Meta-Aramidfasern, den Para-Aramidfasern, den Meta-Aramid- und Para-Aramid-Copolymerfasern oder einem Gemisch derselben ausgewählt sind.

5. Verfahren nach Anspruch 1 oder Anspruch 2, wobei die organischen Fasern Pflanzenfasern sind.

6. Verfahren nach Anspruch 5, wobei die Pflanzenfasern aus der Gruppe ausgewählt sind, die von Leinenfasern, Bananenbaumfasern, Hanffasern, Brennnesselfaser, Kokosnussfasern, Baumwollfasern, Henequenfasern, Sisalfasern, Jutefasern, Ramiefasern, Fasern aus Weizenstroh oder jedem anderen Getreide, Holzfasern oder einem Gemisch derselben gebildet ist.

7. Verfahren nach einem der Ansprüche 1 bis 6, wobei die Polymermatrix ein duroplastisches Polymer oder ein thermoplastisches Polymer ist.

8. Verfahren nach einem der Ansprüche 1 bis 7, wobei das Wasser-Alkohol-Gemisch ein Volumenverhältnis Wasser/Alkohol zwischen 30/70 und 70/30 aufweist.

9. Verfahren nach einem der Ansprüche 1 bis 8, wobei das Inkontaktversetzen des Gemischs mit dem Verbundmaterial zwischen 15 min und 105 min dauert.

10. Verfahren nach einem der Ansprüche 1 bis 9, wobei das Inkontaktversetzen des Gemischs mit dem Verbundmaterial durch Zirkulation eines Gemischstroms durch den Reaktor erfolgt, in dem das Verbundmaterial angeordnet ist.

11. Verfahren nach einem der Ansprüche 1 bis 10, umfassend ferner einen Schritt, der darin besteht, das Verbundmaterial vor seinem Inkontaktversetzen mit dem Gemisch in Granulat zu reduzieren.

12. Verfahren nach einem der Ansprüche 1 bis 11, umfassend ferner das Rückgewinnen eines Ausflusses als Ergebnis der Solvolyse und abgeleitet aus dem Reaktor; und
eventuell das Verbrennen des Ausflusses zum Heizen des Reaktors.

## Claims

1. A method for recovering organic fibers from a composite material comprising a polymer matrix and organic fibers, the method comprising the following steps:
- providing a solution comprising a mixture of water and alcohol;
- disposing the composite material inside a reactor;
- placing the mixture in contact with the composite material in order to carry out a solvolysis reaction of the polymer matrix of the composite material;
- recovering the organic fibers;
wherein the pressure and temperature in the reactor are set so as to fall within the homogeneous subcritical region of the phase diagram, within the supercritical region, or near the critical point; and
wherein the temperature is below the degradation temperature of the organic fibers.

2. The method according to claim 1, wherein the temperature and/or pressure is supercritical.

3. The method according to claim 1 or claim 2, wherein the organic fibers are aramid fibers and the temperature is set to at most 300 °C.

4. The method according to claim 3, wherein the aramid fibers are selected from: meta-aramid fibers, para-aramid fibers, para-aramid and meta-aramid copolymer fibers, or a mixture thereof.

5. The method according to claim 1 or claim 2, wherein the organic fibers are plant fibers.

6. The method according to claim 5, wherein the plant fibers are selected from the group consisting of:
flax fibers, banana fibers, hemp fibers, nettle fibers, coconut fibers, cotton fibers, henequen fibers, sisal fibers, jute fibers, ramie fibers, fibers from wheat straw or any other grain, wood fibers, or a mixture thereof.

7. The method according to one of claims 1 to 6, wherein the polymer matrix is thermoset polymer or thermoplastic polymer.

8. The method according to one of claims 1 to 7, wherein the mixture of water and alcohol has a water/alcohol volume ratio of between 30:70 and 70:30.

9. The method according to one of claims 1 to 8, wherein the mixture and the composite material are placed in contact for 15 min to 105 min.

10. The method according to one of claims 1 to 9, wherein the mixture and the composite material are placed in contact by circulating a stream of mixture through the reactor in which the composite material is disposed.

11. The method according to one of claims 1 to 10, further comprising the step consisting in reducing the composite material to granules before being placed in contact with the mixture.

12. The method according to one of claims 1 to 11, further comprising the recovery of effluent produced by the solvolysis and discharged outside the reactor; and
optionally the burning of the effluent to heat the reactor.
